# EUROPÄISCHE PATENTSCHRIFT

(11) **EP 1 331 414 B1**
(45) Veröffentlichungstag und Bekanntmachung des Hinweises auf die Patenterteilung: **17.08.2005**
(21) Anmeldenummer: 03450013.2
(22) Anmeldetag: 15.01.2003
(51) Int. Cl.: F16D 25/08, F16D 25/12

(54) **Schaltkupplung**
Clutch
Embrayage

(30) Priorität: 23.01.2002 AT 332002 U
(43) Veröffentlichungstag der Anmeldung: 30.07.2003
(73) Patentinhaber: Leopold, Horst, 4060 Leonding (AT)
(72) Erfinder: Leopold, Horst, 4060 Leonding (AT)
(74) Vertreter: Hübscher, Helmut, Dipl.-Ing.

(56) Entgegenhaltungen:
- EP-A- 0 433 466
- EP-A- 1 045 161
- AT-U- 4 033
- US-A- 4 523 558

## Beschreibung

Die Erfindung bezieht sich auf eine Schaltkupplung mit zwei zwischen sich eine umfangsseitige Keilnut bildenden, drehfest auf einer Welle sitzenden Scheiben, von denen eine mittels eines hydraulischen Schalttriebes axial verstellbar ist, und mit in die Keilnut eingesetzten, von einer Ringfeder umschlossenen, keilförmigen Kupplungssegmenten, die mit einer sie umschließenden, gegenüber der Welle frei drehbar gelagerten Trommel radial zusammenwirken, wobei der Schalttrieb aus einem auf der Welle über ein Wälzlager drehbar abgestützten Zylinder und aus einem im Zylinder axial verschiebbar gelagerten Ringkolben besteht.

Bei Schaltkupplungen dieser Art (AT 004 033 U1) wird durch die axiale Verstellung einer der beiden Scheiben über den hiefür vorgesehenen Schalttrieb die sich zwischen den Scheiben ergebende, keilförmige Ringnut im Querschnitt verringert, so daß die eingesetzten, keilförmigen Kupplungssegmente entlang der kegelförmigen Nutflanken radial nach außen kraftschlüssig gegen die die Scheiben umschließende Trommel gedrückt werden. Der Schalttrieb besteht dabei aus einem die Welle koaxial umschließenden Zylinder, der bodenseitig eine einspringende Ringschulter bildet, die mit einer entsprechenden Ringschulter eines in den Zylinder eingesetzten Ringkolbens zusammenwirkt, wobei der sich zwischen den Ringschultern des Zylinders und des Ringkolbens ergebende Ringraum zur axialen Verstellung des Ringkolbens gegenüber dem Zylinder mit einem hydraulischen Druckmittel beaufschlagt wird. Der Ringkolben und der Zylinder sind gegenüber der Welle durch Wälzlager drehbar abgestützt. Während der Ringkolben das ihm zugehörige, auf der Welle axial verschiebbare Wälzlager unmittelbar aufnimmt, trägt das als Festlager ausgebildete, über einen Stützring axial gegenüber der Welle gesicherte Wälzlager für den Zylinder einen Befestigungsflansch der mit dem Zylinder verschraubt wird. Die Temperaturbelastung dieser Wälzlager zur Aufnahme des Schalttriebes auf der der Trommel abgewandten Kupplungsseite ist bei einer entsprechend großen Leistungsübertragung der Schaltkupplung hoch, was sich nachteilig auf die Lebensdauer der Wälzlager auswirkt. Um die Standzeit der Wälzlager für den Schalttrieb zu steigern, wurde der Stützring für das Festlager mit über seinen Umfang verteilten, radial abstehenden Lüfterflügeln versehen, was zwar eine verbesserte Wärmeabfuhr und damit eine erhebliche Verlängerung der Standzeit der Wälzlager mit sich brachte, doch blieb die Wärmebelastung insbesondere des Festlagers hoch.

Der Erfindung liegt somit die Aufgabe zugrunde, eine Schaltkupplung der eingangs geschilderten Art mit einfachen konstruktiven Mitteln so auszugestalten, daß die Wärmebelastung insbesondere des Festlagers für den Schalttrieb herabgesetzt werden kann, ohne auf eine gedrängte Bauweise verzichten zu müssen.

Die Erfindung löst die gestellte Aufgabe dadurch, daß der Ringkolben in eine mit Druckmittel beaufschlagbare, bodenseitige Ringnut des Zylinders eingreift und daß sich der Zylinder über die innere Umfangswand der bodenseitigen Ringnut am Wälzlager abstützt.

Da zufolge dieser Maßnahmen die innere Umfangswand der bodenseitigen Ringnut das Wälzlager für den Zylinder aufnimmt, ergibt sich ein guter Wärmeübergang zwischen diesem Wälzlager und dem Zylinder im Bereich des mit einem hydraulischen Druckmittel beaufschlagbaren Zylinderraumes, so daß zusätzlich Wärme von diesem Wälzlager über das hydraulische Druckmittel zur Beaufschlagung des Ringkolbens abgeführt werden kann. Diese zusätzliche Wärmeabfuhr reicht aus, um die Wärmebelastung insbesondere des das Festlager bildenden Wälzlagers für den Schalttrieb in zulässigen Grenzen zu halten. Dazu kommt noch, daß die mit einem hydraulischen Druckmittel beaufschlagbare Fläche des Ringkolbens bei gleichbleibendem Außendurchmesser des Ringkolbens vergrößert werden kann, weil ja hierfür nicht nur die Fläche einer Ringschulter, sondern die gesamte Stirnfläche des Ringkolbens zur Verfügung steht. Dies bedeutet, daß der Beaufschlagungsdruck bei vorgegebenen Kupplungskräften vorteilhaft vermindert werden kann. Schließlich wird durch den Wegfall eines Befestigungsflansches eine Konstruktionsvereinfachung erzielt.

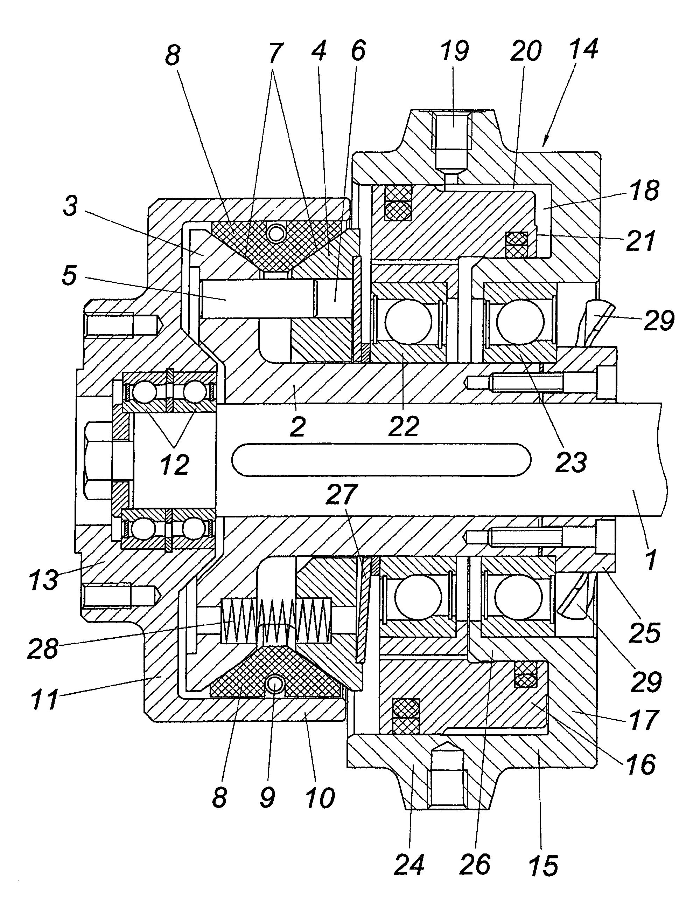

In der Zeichnung ist der Erfindungsgegenstand beispielsweise dargestellt, und zwar wird eine erfindungsgemäße Schaltkupplung in einem vereinfachten Längsschnitt gezeigt.

Die dargestellte Schaltkupplung weist eine beispielsweise von einem Getriebe her antreibbare Welle 1 auf, auf der die Nabe 2 einer Scheibe 3 dreh- und verschiebefest sitzt. Auf der Nabe 2 ist eine weitere Scheibe 4 axial verschiebbar, aber drehfest gelagert. Zu diesem Zweck greifen in der Scheibe 3 gehaltene Führungsbolzen 5 in Führungsbohrungen 6 der Scheibe 4 ein. Zwischen den beiden Scheiben 3 und 4 ergibt sich eine umfangsseitige Keilnut mit kegelförmigen Nutflanken 7 zur Aufnahme keilförmiger Kupplungssegmente 8, die mit Abstand voneinander über den Umfang verteilt angeordnet sind und von einer Ringfeder 9 umschlossen werden. Diese Kupplungssegmente 8 wirken mit dem Mantel 10 einer sie umschließenden Trommel 11 zusammen, die über Wälzlager 12 auf der Welle 1 frei drehbar gelagert ist und im Bereich ihrer Stirnwand einen Anschlußflansch 13 für einen über die Schaltkupplung anzutreibenden Konstruktionsteil bildet.

Zur Betätigung der Schaltkupplung dient ein Schalttrieb 14, der aus einem Zylinder 15 und einem die Welle 1 umschließenden Ringkolben 16 besteht. Der Ringkolben 16 greift dabei in eine im ringförmigen Boden 17 des Zylinders 15 vorgesehene Ringnut 18 ein die über einen Hydraulikanschluß 19 mit einem hydraulischen Druckmittel beaufschlagt werden kann. Wegen der radialen Anordnung des Hydraulikanschlusses muß durch einen Ringspalt 20 zwischen dem Ringkolben 16 und dem Zylinder 15 der Druckmitteldurchgriff auf die stirnseitige Beaufschlagungsfläche 21 des Ringkolbens 16 gewahrt werden.

Da sich der Schalttrieb 14 nicht mit der Welle 1 mitdrehen soll, wird er über Wälzlager 22 und 23 drehbar auf der Welle 1 gelagert und über einen Stützansatz 24 an einem nicht dargestellten Konstruktionsteil undrehbar abgestützt. Während das dem Ringkolben 16 zugeordnete Wälzlager 22 zur Übertragung der Schaltbewegung auf die sich drehende Scheibe 4 axial verstellbar auf der Nabe 2 geführt wird, ist das Wälzlager 23 als Festlager ausgebildet, das durch einen axialen Stützring 25 axial festgelegt wird. Auf diesem Wälzlager 23 ist der Zylinder 15 über die innere Umfangswand 26 der Ringnut 18 unmittelbar abgestützt, was nicht nur eine gedrängte Konstruktion mit einer vergleichsweise großen Beaufschlagungsfläche 21 für den Ringkolben 16 mit sich bringt, sondern auch einen guten Wärmeübergang vom Wälzlager 23 auf den Zylinder 15 im Bereich der Ringnut 18 sicherstellt, so daß ein Teil der Wärme vom Wälzlager 23 über das hydraulische Druckmittel aus dem Ringraum 18 abgeführt werden kann.

Bei einer Beaufschlagung des Schalttriebes 14 mit einem hydraulischen Druckmittel wird der Ringkolben 16 entgegen der Kraft einer als Tellerfeder ausgebildeten Rückstellfeder 27 aus der in der unteren Zeichnungshälfte dargestellten Offenstellung der Schaltkupplung axial verlagert. Über die Öffnungsfederfeder 28 wird die Scheibe 4 gegen die Scheibe 3 verschoben, was ein radiales Auswärtswandern der Kupplungssegmente 8 mit der Wirkung zur Folge hat, daß die Trommel 11 kraftschlüssig mitgenommen wird, wie dies in der oberen Zeichnungshälfte dargestellt ist. Bei einer Entlastung des Schalttriebes 14 wird die Scheibe 4 über zwischen den Scheiben 3 und 4 angeordnete Öffnungsfedern 28 in die Ausgangslage zurückgestellt, wobei der Ringkolben 16 über die Rückstellfeder 27 ebenfalls in seine Ausgangsstellung verlagert wird. Gleichzeitig bedingt die Ringfeder 9 das Ablösen der Kupplungssegmente 6 vom Mantel 10 der Trommel 11, womit der Kraftschluß zwischen der Welle 1 und der Trommel 9 unterbrochen ist.

Damit die Wärmebelastung der Lager 22 und 23 zusätzlich vermindert werden kann, sind über den Umfang des Stützringes 25 verteilte, radial abstehende Lüfterflügel 29 vorgesehen, die einen entsprechenden Kühlluftstrom im Lagerbereich bewirken. Im Zusammenhang mit der Wärmeabfuhr über das hydraulische Druckmittel in der Ringnut 18 kann somit die Wärmebelastung der Wälzlager 22 und 23 auch bei hohen zu übertragenden Leistungen auf ein zulässiges Maß beschränkt werde, was sich unmittelbar auf die Standzeit dieser Wälzlager 22 und 23 auswirkt.

## Patentansprüche

1. Schaltkupplung mit zwei zwischen sich eine umfangsseitige Keilnut bildenden, drehfest auf einer Welle (1) sitzenden Scheiben (3, 4), von denen eine mittels eines hydraulischen Schalttriebes (14) axial verstellbar ist, und mit in die Keilnut eingesetzten, von einer Ringfeder umschlossenen, keilförmigen Kupplungssegmenten (8), die mit einer sie umschließenden, gegenüber der Welle (1) frei drehbar gelagerten Trommel (11) radial zusammenwirken, wobei der Schalttrieb (14) aus einem auf der Welle (1) über ein Wälzlager (23) drehbar abgestützten Zylinder (15) und aus einem im Zylinder (15) axial verschiebbar gelagerten Ringkolben (16) besteht, **dadurch gekennzeichnet, daß** der Ringkolben (16) in eine mit hydraulischem Druckmittel beaufschlagbare, bodenseitige Ringnut (18) des Zylinders (15) eingreift und daß sich der Zylinder (15) über die innere Umfangswand (26) der bodenseitigen Ringnut (18) am Wälzlager (23) abstützt.

## Claims

1. Clutch having two discs (3, 4) mounted to a shaft (1) (1) in a rotationally secure manner and forming between them a key groove on the periphery face, one of said discs being axially displaceable by means of a hydraulic switching drive (14), and having sphenoidal clutch segments (8) inserted in the key groove and enclosed by an annular spring, said segments (8) working radially in association with a drum (11) mounted in a freely pivotable manner in relation to the shaft, said segments being surrounded by said drum, wherein the switching drive (14) comprises a cylinder (15) supported pivotably on the shaft (1) by means of a roller bearing (23) and an annular piston (16) mounted in an axially displaceable manner in the cylinder (15), **characterised in that** the annular piston (16) engages in an annular groove (18) of the cylinder (15) on the bottom face which can be contacted with hydraulic pressure medium and that the cylinder is supported on the roller bearing (23) by means of the inner periphery wall (26) of the annular groove (18) on the bottom face.

## Revendications

1. Embrayage, comprenant deux disques (3,4) montés de façon assujettie en rotation sur un arbre (1), formant côté périphérie une gorge cunéiforme, disques dont l'un est réglable axialement à l'aide d'une transmission de commutation (14) hydraulique, et avec des segments d'embrayage (8) cunéiformes, entourés par un ressort annulaire, insérés dans la gorge cunéiforme, les segments coopérant radialement avec un tambour (11), monté de façon à tourner librement par rapport à l'arbre et les entourant, la transmission de commutation (14) étant formée d'un cylindre (15), soutenu de façon à pouvoir tourner sur l'arbre (1) par l'intermédiaire d'un palier à roulement (23), et d'un piston annulaire (16), monté de façon déplaçable axialement dans le cylindre (15), **caractérisé en ce que** le piston annulaire (16) s'engage dans une gorge annulaire (18) du cylindre (15), située côté fond, susceptible d'être sollicitée par un fluide hydraulique sous pression, et **en ce que** le cylindre (15) prend appui sur le palier à roulement (23), par l'intermédiaire de la paroi périphérique intérieure (26) de la gorge annulaire (18) située côté fond.
